# EUROPÄISCHE PATENTSCHRIFT

(11) **EP 0 354 467 B1**
(45) Veröffentlichungstag und Bekanntmachung des Hinweises auf die Patenterteilung: **24.02.1993**
(21) Anmeldenummer: 89114304.2
(22) Anmeldetag: 03.08.1989
(51) Int. Cl.: B23Q 3/157

(54) **Werkzeugmaschine**
Machine tool
Machine-outil

(30) Priorität: 10.08.1988 DE 3827053
(43) Veröffentlichungstag der Anmeldung: 14.02.1990
(73) Patentinhaber: CHIRON-WERKE GMBH & CO. KG, 78532 Tuttlingen (DE)
(72) Erfinder: Winkler, Hans-Henning, Dr., 7200 Tuttlingen (DE); Rütschle, Eugen, 7202 Mühlheim/Donau (DE)
(74) Vertreter: Witte, Alexander, Dr.-Ing.

(56) Entgegenhaltungen:
- EP-A- 0 249 898
- DE-A- 1 904 093
- DE-A- 3 320 874
- DE-A- 3 404 497
- GB-A- 1 195 638
- US-A- 4 309 809
- US-A- 4 338 709
- PATENT ABSTRACTS OF JAPAN, Band 8, Nr. 158 (M-311)[1595], 21. Juli 1984; & JP-A-59 53 138 (ENSHIYUU SEISAKU K.K.) 27-03-1984

## Beschreibung

Die Erfindung betrifft eine Werkzeugmaschine mit einem mehrere in Greifern gehaltene Werkzeughalter enthaltenden Magazin, aus dem ein ausgewählter Werkzeughalter mittels eines einen Greifer aufweisenden Armes entnehmbar und in eine Arbeitsstellung in einer rotierenden ersten Aufnahme der Werkzeugmaschine einführbar ist, wobei der Werkzeughalter im Greifer mittels einer den Werkzeughalter umfassenden zweiten Aufnahme gehalten ist, die mit einem in eine Umfangsnut des Werkzeughalters formschlüssig greifenden Profil versehen ist, derart, daß der Werkzeughalter auch in der Arbeitsstellung im Greifer verbleibt und sich in diesem dreht, wobei der Greifer mit einem federbelasteten Rasthebel versehen ist, dessen freies Ende als Rastnase im unbelasteten Zustand der Feder in eine Aussparung am Umfang des Werkzeughalters eingreift und beim Einführen des Werkzeughalters in die erste Aufnahme mittels eines raumfesten Anschlages gegen die Kraft der Feder außer Eingriff mit der Aussparung gebracht wird, und am Rasthebel ein von der Rastnase beabstandetes Betätigungselement zum Herausschwenken der Rastnase vorgesehen ist.

Eine Werkzeugmaschine der vorstehend genannten Art ist aus dem Dokument DE-A-28 19 607 bekannt.

Bei der bekannten Werkzeugmaschine hat das Werkzeugmagazin die Gestalt einer horizontalachsigen Trommel. Die Trommel ist mit strahlenförmig von der Achse ausgehenden Werkzeughaltersicherungen versehen, die an ihrem peripheren freien Ende eine kreisbogenförmige Aufnahme für einen Ringflansch der Werkzeughalter bilden. Da die kreisbogenförmige Aufnahme nur einen Umfangswinkel von weit weniger als 180° des Werkzeughalters überdeckt, sind zusätzlich radiale Halter auf der Vorderseite der Werkzeughaltersicherung vorgesehen. Diese Halter sind im halben Abstand zwischen Achse und Umfang des Magazins mittels einer Befestigungsschraube angeschraubt und im übrigen elastisch in einer Axialebene verschwenkbar. An ihrem freien Ende laufen die Halter in Gabelschenkel aus, die aus der radialen Richtung heraus in eine axiale Richtung umgekröpft sind und dort zu beiden peripheren Seiten des Werkzeughalters ein Verriegelungsglied bilden, das in eine Flanschausnehmung am Ringflansch des Werkzeughalters zu beiden Seiten eingreift. Jeder der Halter ist mit einem axial verlaufenden Stift versehen, der durch die Werkzeughaltersicherung axial in das Innere des Magazins hindurchreicht. Dort befindet sich in der Nähe der Spindel der Werkzeugmaschine ein raumfester Anschlag. Wird nun ein Werkzeug in die Spindelaufnahme eingeführt, so gelangt zugleich der axiale Stift des Halters in Anlage an den raumfesten Anschlag, mit der Wirkung, daß der Halter in Axialrichtung stehen bleibt, während der Werkzeughalter mit seinem Konus in die Spindelaufnahme eingeführt wird. Aufgrund dieser Relativbewegung zwischen Halter und Werkzeughaltersicherung geraten die Verriegelungsglieder am freien Ende der Gabelschenkel außer Eingriff mit der Flanschausnehmung, so daß der Werkzeughalter nun in der Spindelaufnähme gedreht werden kann. Wenn das Werkzeugmagazin bei der bekannten Werkzeugmaschine manuell neu bestückt werden soll, so kann ebenfalls von der Innenseite des Magazins eine fluidische Betätigungsvorrichtung an die Werkzeughaltersicherungen herangefahren werden, um über eine Kolben-Zylinder-Einheit einen axial verschiebbaren Anschlag auszufahren, der den Halter ebenso löst, wie dies soeben für den Fall des raumfesten Anschlages an der Spindel beschrieben wurde.

Eine weitere Werkzeugmaschine, bei der jedoch die Greifer-Aufnahme für die Werkzeughalter durch zwei gegeneinander verschwenkbare, jeweils etwa einen Halbkreisbogen der Aufnahme bildenden Finger gebildet wird, ist aus dem Dokument DE-C-36 20 364 bekannt.

Bei der bekannten Werkzeugmaschine handelt es sich um ein Bearbeitungszentrum für Fräs- und Bohrarbeiten, bei dem um eine vertikalachsige Spindel herum eine Vielzahl von Armen angeordnet ist, die radial zur Spindelachse verschwenkbar sind und an ihren unteren freien Enden mit Greifern für Werkzeughalter versehen sind. In der Magazinstellung befinden sich die Werkzeughalter in ringförmiger Anordnung oberhalb der Aufnahme der Spindel. Zum Einwechseln eines Werkzeughalters wird einer der Arme nach unten und radial einwärts verschwenkt, so daß der Werkzeughalter mit der Spindelachse fluchtet. Durch relatives axiales Verfahren von Spindel und Arm wird nun der Werkzeughalter in die rotierende Aufnahme der Spindel eingesetzt. Zum Auswechseln des Werkzeughalters laufen die vorstehend genannten Schritte in der umgekehrten Reihenfolge ab und gleichzeitig wird ein anderer Arm mit einem anderen Werkzeughalter in Bewegung versetzt, um unmittelbar nach dem Auswechseln des ersten Werkzeughalters aus der rotierenden Aufnahme der Spindel den nächsten Werkzeughalter für den nächsten Bearbeitungsvorgang einwechseln zu können.

Um die Werkzeugwechselzeiten dabei so gering wie möglich zu halten, sind die Greifer so ausgebildet, daß sie den Werkzeughalter ringförmig umfassen, jedoch in der Arbeitsstellung eine Drehbewegung des Werkzeughalters zulassen. Aufgrund dessen kann der Greifer auch während des Arbeitens des Werkzeuges am Werkzeughalter verbleiben und braucht zum Ein- und Auswechseln nicht jeweils an den Werkzeughalter heran oder von diesem weg geschwenkt zu werden.

Um beim Vorbereiten eines neuen Bearbeitungszyklusses die Greifer an den Enden der Arme mit den erforderlichen Werkzeughaltern bestücken zu können, sind die Greifer bei der bekannten Werkzeugmaschine mit zwei Fingern versehen, die jeweils einen etwa halbkreisförmigen Abschnitt der ringförmigen Aufnahme für den Werkzeughalter bilden. Die Finger können zum Bestücken der Greifer auseinandergeschwenkt werden und zwar entweder um eine zur Werkzeughalterachse parallele Achse oder um eine dazu senkrechte Achse. Der Werkzeughalter kann nun in einer Richtung, die im wesentlichen in der Ebene der Aufnahme des Greifers liegt, zwischen die geöffneten Finger des Greifers eingeführt werden, um dann durch Schließen und Verrasten der Finger wiederum die allseits umgreifende Aufnahme für den Werkzeughalter herzustellen.

Da, wie erwähnt, der Werkzeughalter bei dem bekannten Greifer frei drehbar gelagert ist, gelangt der Werkzeughalter in einer nicht-definierten Drehstellung in die Aufnahme der Spindel. Bei der bekannten Werkzeugmaschine ist daher eine Anordnung getroffen, bei der zwischen Greifer und Werkzeughalter ein Reibschluß hergestellt wird, wenn der Werkzeughalter in die rotierende Spindel eingeführt wird. Dieser Reibschluß bewirkt ein Abbremsen der Drehbewegung des Werkzeughalters, so daß ein in der rotierenden Spindel angeordneter Mitnehmerstein in eine entsprechende Aussparung des Werkzeughalters auf kürzest möglichem Weg einfallen kann. Ohne einen derartigen Reibschluß würde hingegen die Gefahr bestehen, daß der Mitnehmerstein auf eine ebene Oberfläche des Werkzeughalters aufsetzt und diesen endlos mitdreht, ohne daß es zu einer formschlüssigen Mitnahmeverbindung zwischen der rotierenden Spindel und dem Werkzeughalter kommt.

Für manche Anwendungsfälle ist jedoch erwünscht, daß der Werkzeughalter in einer definierten Drehposition in die rotierende Aufnahme der Spindel eingeführt wird. Andererseits ist dabei zu berücksichtigen, daß bei den heutzutage geforderten kurzen Werkzeugwechselzeiten erhebliche Bahngeschwindigkeiten der Arme und Greifer beim Werkzeugwechsel auftreten, wobei die Bewegungsbahn der Werkzeughalter zwischen Spindelaufnahme und Magazinstellung beim Werkzeugwechsel nicht geradlinig sondern entlang einer mehrfach abgekrümmten räumlichen Bahn verläuft. Die Werkzeughalter werden daher beim Werkzeugwechsel erheblichen dynamischen Belastungen ausgesetzt, so daß durchaus nicht sichergestellt ist, daß die Drehposition der Werkzeughalter zwischen Magazinstellung und Arbeitsstellung bzw. umgekehrt erhalten bleibt.

Aus dem Dokument DE-A-25 25 212 ist eine weitere Werkzeugmaschine bekannt, bei der ebenfalls ein automatischer Wechsel von Werkzeughaltern möglich ist. Die bekannte Werkzeugmaschine weist einen vertikalachsigen Spindelstock auf, der im seitlichen Abstand zu einem Magazin von Werkzeughaltern angeordnet ist. Die Werkzeughalter sind in Greifern gehalten, die ihrerseits an einem in einer Horizontalebene umlaufenden Kettenförderer angeordnet sind. Die Greifer haben eine im wesentlichen U-förmige Aufnahme, d.h. sie umfassen die genormte Umfangsnut der Werkzeughalter nur etwa über den halben Umfang.

Zwischen dem Spindelstock und dem Magazin ist eine Transportvorrichtung für die Werkzeughalter vorgesehen, die zwischen dem Spindelstock und dem Magazin verfahrbar ist. Die Transportvorrichtung weist einen horizontal angeordneten und um eine Vertikalachse drehbaren symmetrischen Arm auf, der an seinen beiden freien Enden ebenfalls mit U-förmigen Aufnahmen für die Werkzeughalter versehen ist. Wenn ein Werkzeughalter aus dem Magazin entnommen werden soll, fährt die Transportvorrichtung eine der Aufnahmen des Armes an eine Aufnahme des Magazins, die sich in einer Übergabeposition befindet, heran und mittels eines Schiebers wird ein Werkzeughalter aus der U-förmigen Aufnahme des Magazins in die U-förmige Aufnahme der Armes herübergeschoben. Der Arm wird nun um 180° verschwenkt und das Werkzeug wird an die Spindelaufnahme herangefahren und dort durch vertikalachsiges Verfahren der Spindel in diese hineingezogen.

Bei der bekannten Werkzeugmaschine werden die Werkzeughalter sowohl im umlaufenden Kettenförderer des Magazins wie auch im sich drehenden Arm der Transportvorrichtung einer Zentrifugalkraft ausgesetzt, die bestrebt ist, die Werkzeughalter aus den U-förmigen Aufnahmen herauszubewegen. Um dies zu verhindern sind bei der bekannten Werkzeugmaschine an beiden genannten Aufnahmen jeweils Sperrklinken vorgesehen, die jeweils vor den freien Enden der beiden Schenkel der U-förmigen Aufnahmen angeordnet sind und von oben bzw. von unten beidseitig an die genormten Aussparungen am Umfang des Werkzeughalters eingreifen. Zur Betätigung der Sperrklinken ist am Magazin eine Kolben-Zylinder-Einheit vorgesehen, mit der die Sperrklinken bei der Übergabe eines Werkzeuges über ein Gestänge nach oben bzw. nach unten aus der Bewegungsbahn des Werkzeughalters weggeschwenkt werden können. Die Anordnung ist dabei so getroffen, daß die magazinseitigen Sperrklinken bei ihrer Betätigung die Sperrklinken des Armes der Transporteinrichtung mitbetätigen. Die Sperrklinken der Transporteinrichtung sind federbelastet und weisen keine eigenständige Betätigungseinrichtung auf. Beim Einwechseln eines Werkzeuges in die Spindelaufnahme wirken die Sperrklinken der Transporteinrichtung mit Nutensteinen an der Spindelaufnahme zusammen, so daß der Werkzeughalter beim Einziehen in die Spindelaufnahme entriegelt wird.

Bei dieser bekannten Werkzeugmaschine ist das Bestücken des Magazins jedoch verhältnismäßig aufwendig, weil zum Bestücken jedes einzelnen Greifers zunächst über die Kolben-Zylinder-Anordnung die Sperrklinken entriegelt werden müssen, ehe der Werkzeughalter in den Greifer eingesetzt werden kann. Außerdem ist bei der bekannten Werkzeugmaschine nachteilig, daß die Verschwenkebene der Sperrklinken parallel zur Übergaberichtung der Werkzeughalter verläuft, so daß bei zu großen Kräften die Sperrklinken unbeabsichtigt überwunden werden können, zumal diese bei der bekannten Werkzeugmaschine mit Anlaufschrägen versehen sind.

Weiterhin ist aus dem Dokument DE-A-35 31 160 noch eine Werkzeugmaschine bekannt, bei der ein zweiarmiger Verriegelungshebel gegen die Kraft einer Feder ausgelenkt wird, wenn er beim Einwechseln eines Werkzeuges in Anschlag an eine Kulissenführung der Spindel der Werkzeugmaschine gerät.

Aus dem Dokument US-A-4 309 809 ist eine Werkzeugmaschine mit automatischem Werkzeugwechsler bekannt. Bei dieser Werkzeugmaschine ist eine horizontalachsige Spindel vorgesehen, in die aus einem oberhalb der Spindel angeordneten trommelartigen Werkzeugmagazin Werkzeughalter in die Spindel eingewechselt werden können. Um einen Werkzeughalter in die Spindel hereinzuziehen und dort zu sichern, sind in der Spindel Spannzangen vorgesehen, die an einem radial verbreiterten Kopf am oberen Ende des Werkzeughalterkonus angreifen. Diese Spannzangen sind als in einer Radialebene verschwenkbare Finger ausgebildet, die mittels einer in der Spindel axial verschiebbaren Stange betätigt werden.

Aus dem Dokument DE-A-19 04 093 ist eine Werkzeugmaschine bekannt. Bei dieser bekannten Werkzeugmaschine werden die Werkzeughalter mittels eines Greifers gehalten, der federnd spreizbare Klemmfinger aufweist. Diese Klemmfinger werden bei einer Bewegung des Werkzeugwechslers automatisch geschlossen bzw. freigegeben, wenn der Werkzeughalter mit der Spindel in Eingriff steht. Dies wird dadurch erreicht, daß der Werkzeugwechsler als Gelenkvieleck ausgebildet ist, das mittels einer Kolben-Zylinder-Einheit verschwenkbar ist. Wenn sich das Gelenkvieleck in einer Einführstellung für den Werkzeughalter in die Spindel befindet, betätigt einer der Gelenkarme einen Mechanismus, der die Finger freigibt bzw. schließt.

Aus dem Dokument PATENT ABSTRACTS OF JAPAN, Band 8, Nr. 158 (M-311) (1595) vom 21.7.1984 bzw. dem Dokument JP-A-59 53 138 ist ein Verfahren zum schnellen Werkzeugwechseln bekannt. Hierzu wird ein Werkzeugwechsler mit zwei Backen verwendet, die auf nicht näher beschriebene Art geöffnet bzw. geschlossen werden können.

Aus dem Dokument EP-A-0 249 898 ist ein Greifer für einen Werkzeughalter einer Werkzeugmaschine bekannt, bei dem der Greifer wiederum zwei verschwenkbare Backen zum Halten eines Werkzeughalters aufweist. Die Backen sind von Hand auseinanderschwenkbar bzw. schließbar. An den vorderen Enden der Backen, die im geschlossenen Zustand aneinandergrenzen, ist ein Verriegelmechanismus mit einer Stiftzentrierung vorgesehen.

Aus dem Dokument GB-A-1 195 638 ist eine Werkzeugmaschine bekannt, bei der Werkzeughalter in Aussparungen am Umfang einer kreisförmigen Halteplatte eingesetzt sind. Die Werkzeughalter sind in dieser Platte federnd gelagert.

Eine ähnliche Anordnung ist auch aus dem Dokument US-A-4 338 709 bekannt.

Das Dokument DE-A-33 20 874 beschreibt eine Werkzeugmaschine mit einem Greifer, ähnlich demjenigen des oben bereits genannten Dokumentes EP-A-0 249 898, bei dem jedoch die Halterung des Werkzeughalters im Greifer durch eine feste sowie eine schwenkbare Backe gebildet wird.

Schließlich beschreibt das Dokument DE-A-34 04 497 noch ein Verfahren und eine Vorrichtung zur Drehausrichtung einer Werkzeugmaschinen-Arbeitsspindel. Dabei ist ein Greifer vorgesehen, der eine etwa halbkreisförmige Auflagefläche für einen Halteflansch eines Werkzeughalters aufweist. Für Werkzeughalter, die an zwei diametral gegenüberliegenden Positionen des Umfanges mit Ausnehmungen versehen sind, besteht eine Fixiermöglichkeit durch von unten in die halbkreisförmige Auflagefläche hineinragende Nasen.

Der Erfindung liegt demgegenüber die Aufgabe zugrunde, eine Werkzeugmaschine der eingangs genannten Art dahingehend weiterzubilden, daß der Werkzeughalter in dem Greifer nur dann gehalten und verrastet werden kann, wenn er korrekt in den Greifer eingesetzt wurde.

Diese Aufgabe wird erfindungsgemäß dadurch gelöst, daß die zweite Aufnahme den Werkzeughalter ringförmig umfaßt und zwei gegeneinander verschwenkbare, jeweils etwa einen Halbkreisbogen der Aufnahmen bildende Finger aufweist, daß einer der Finger mit einem Riegel versehen ist, und daß die Bewegungsbahn des Riegels beim Verschwenken der Finger und des Rasthebels beim Verschwenken der Rastnase einander teilweise überschneiden, derart, daß beim Schließen der Finger zum Bilden der zweiten Aufnahme der Rasthebel nur in der eingeschwenkten Stellung der Rastnase außerhalb der Bewegungsbahn des Riegels liegt.

Die der Erfindung zugrundeliegende Aufgabe wird auf diese Weise vollkommen gelöst. Die an sich bekannte Bauart der zweiten Aufnahme gewährleistet nämlich durch ihre formschlüssige, ringförmige Halterung des Werkzeughalters, daß dieser in beliebigen Lagen sicher gehalten wird. Die Finger des Greifers können vor allem aber nur dann geschlossen werden, wenn die Rastnase vollkommen in die Aussparung eingeschwenkt ist. Andernfalls wirkt nämlich der Rasthebel als Schikane für den Riegel und verhindert auf mechanische Weise ein Schließen der Finger.

Dies ist besonders vorteilhaft auch deswegen, weil genormte Werkzeughalter an um 180° gegeneinanderversetzten Umfangspositionen mit den genannten Aussparungen versehen sind, so daß es denkbar ist, daß der Werkzeughalter um 180° falsch im Greifer sitzt. Die Aussparungen sind jedoch bei genormten Werkzeughaltern unterschiedlich tief ausgebildet, so daß es möglich ist, die Rastnase so groß zu dimensionieren, daß sie nur in die tiefere der beiden Aussparungen paßt. Dann kann mit der beschriebenen Anordnung sichergestellt werden, daß die Finger des Greifers nur dann geschlossen werden können, wenn die Rastnase tatsächlich in der tieferen der beiden Aussparungen sitzt und damit eine eindeutige Drehposition des Werkzeughalters erreicht ist. Durch die beschriebene mechanische Schikane wird dies für die Bestückungsperson auch leicht erkennbar, so daß Irrtümer ausgeschlossen werden können.

Bei einer bevorzugten Ausgestaltung der Erfindung ist der Rasthebel zweiarmig ausgebildet und trägt an einem freien Ende die Rastnase und an seinem anderen freien Ende einen Betätigungsknopf zum manuellen Verschwenken des Rasthebels. Der Betätigungsknopf ist auf der von der ersten Aufnahme abgewandten Seite des Greifers angeordnet.

Diese Maßnahme hat den Vorteil, daß der Rasthebel manuell entrastet werden kann, um Werkzeughalter aus dem Werkzeugmagazin wieder entnehmen zu können. Der Betätigungsknopf ist dabei an einer leicht zugänglichen Seite angeordnet und kann demzufolge in einfacher Weise betätigt werden.

Weitere Vorteile ergeben sich aus der Beschreibung und der beigefügten Zeichnung.

Ausführungsbeispiele der Erfindung sind in der Zeichnung dargestellt und werden in der folgenden Beschreibung näher erläutert. Es zeigen:
- Fig. 1: eine Seitenansicht, teilweise im Schnitt, durch einen Arm und einen Greifer einer erfindungsgemäßen Werkzeugmaschine;
- Fig. 2: eine Draufsicht auf die in Fig. 1 gezeigte Anordnung;
- Fig. 3: einen radialen Querschnitt durch einen genormten Werkzeughalter;
- Fig. 4: eine Darstellung, ähnlich Fig. 1, jedoch für ein weiteres Ausführungsbeispiel der Erfindung;
- Fig. 5: eine Draufsicht auf die Anordnung gemäß Fig. 4.

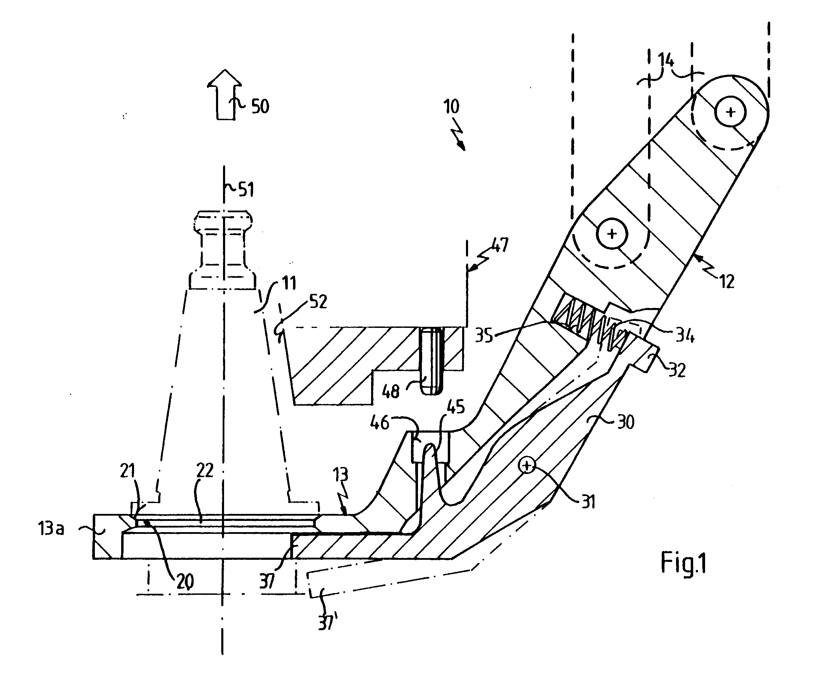

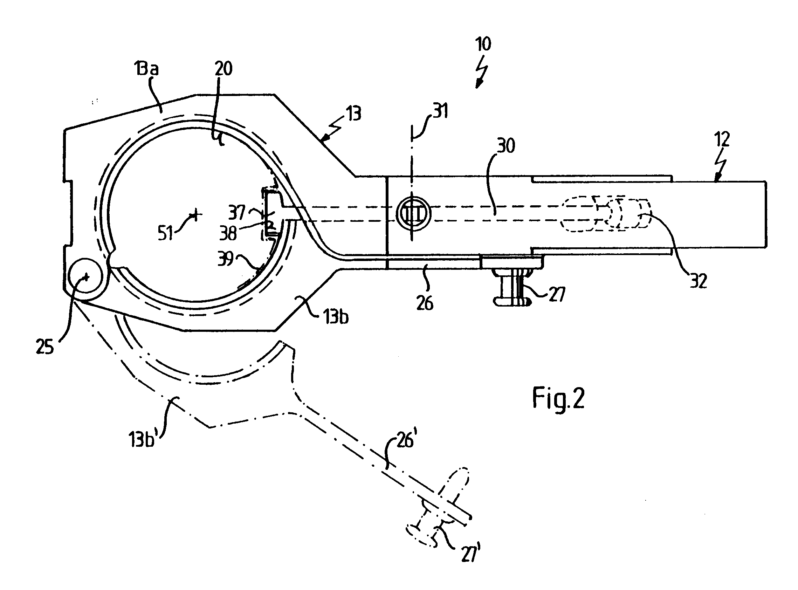

In den Fig. 1 und 2 bezeichnet 10 insgesamt einen Werkzeugwechsler, mit dem Werkzeughalter 11 in einem Bohr- und Fräszentrum zum Ausführen unterschiedlicher Bearbeitungsvorgänge ein- und ausgewechselt werden können.

Der Werkzeugwechsler 10 weist hierzu einen Arm 12 auf, der an seinem freien Ende mit einem Greifer 13 zum Ergreifen und Umschließen der Werkzeughalter 11 versehen ist. Die Bewegungen des Werkzeugwechslers 10 können beispielsweise über Gelenkstangen 14 ausgeübt werden, die am Arm 12 angreifen, wie dies an sich bekannt ist. Jedem der in der Werkzeugmaschine verwendeten Werkzeughalter ist dabei ein eigener Arm zugeordnet und es wird je nachdem, welches Werkzeug benötigt wird, der betreffende Arm an die Spindel herangeschwenkt.

Aus Fig. 2 ist deutlich erkennbar, daß der Greifer 13 zwei Finger 13a, 13b aufweist, die eine kreisförmige erste Aufnahme 20 definieren. Die Anordnung ist dabei so gewählt, daß die Finger 13a, 13b jeweils etwa einen halbkreisförmigen Abschnitt der ersten Aufnahme 20 bilden. Die Finger 13a, 13b sind, wie man aus Fig. 1 erkennen kann, mit einem Umfangsprofil 21 versehen, daß unter gewissem Spiel an eine genormte Umfangsnut 22 des Werkzeughalters 11 angepaßt ist. Der Werkzeughalter 11 ist daher im Greifer 13 zwar axial fixiert, jedoch drehbar angeordnet.

Es versteht sich, daß statt der Anordnung von Profil 21 und Umfangsnut 22 auch andere Rotationsverbindungen zwischen Werkzeughalter 11 und Greifer 13 vorgesehen werden können, beispielsweise in Form eines Kugellagers oder dergleichen, wie dies ebenfalls an sich bekannt ist.

Zum Bestücken der Greifer 13 können die Finger 13a, 13b aus der in Fig. 2 durchgezogen eingezeichneten Stellung heraus gegeneinander verschwenkt werden und zwar beispielsweise um eine erste Achse 25, die senkrecht zur Zeichenebene der Fig. 2 verläuft. In Fig. 2 ist strichpunktiert der Finger 13b' in einer teilweise ausgeschwenkten Position gezeigt. Man erkennt daraus leicht, daß bei genügend weitem Umschwenken des Fingers 13b relativ zu dem mit dem Greifer 13 starr verbundenen Finger 13a ein Werkzeughalter in die Aufnahme 20 eingesetzt und dann durch Schließen der Finger 13a, 13b fixiert werden kann. Die Richtung der Bestückung bzw. der Entnahme der Werkzeughalter 11 liegt dabei in der Zeichenebene der Fig. 2.

Zum Öffnen bzw. Schließen der Finger 13a, 13b ist der Finger 13b mit einem Fortsatz 26 versehen, der an seinem freien Ende einen Druckknopf 27 trägt. Der Druckknopf 27 kann nach Art einer Kugelschreibermechanik ausgebildet sein, derart, daß beim Schließen der Finger 13a, 13b der Druckknopf 27 in eine entsprechende Buchse im Arm 12 rastend einfällt und andererseits durch erneutes Drücken des Druckknopfes 27 diese Rastverbindung zum Öffnen der Finger 13a, 13b wieder gelöst werden kann.

Wie man deutlich aus Fig. 1 erkennen kann, ist im Arm 12 ein Rasthebel 30 angeordnet, der um eine zur Zeichenebene der Fig. 1 senkrechte zweite Achse 31 verschwenkbar ist. An dem in Fig. 1 oberen freien Ende des zweiarmigen Rasthebels 30 ist ein Betätigungsknopf 32 angeformt. Der Betätigungsknopf 30 ist andererseits mit einer Druckfeder 34 verbunden, deren anderes Ende in einem Sackloch 35 des Armes 12 angeordnet ist. Im Ruhezustand, d.h. bei entspannter Feder 34, befindet sich der Rasthebel 30 in der in Fig. 1 durchgehend eingezeichneten Stellung. In dieser Ruhestellung steht der Betätigungsknopf 32 über die Hinterseite des Armes 12 vor.

Am entgegengesetzten freien Ende des anderen Hebelarmes des Rasthebels 30 ist eine Rastnase 37 angeformt, die in der Draufsicht der Fig. 2 eine T-förmige Gestalt aufweist. Die Rastnase 37 ist so dimensioniert, daß sie in eine Aussparung 38 am Umfang des Werkzeughalters 11 greift.

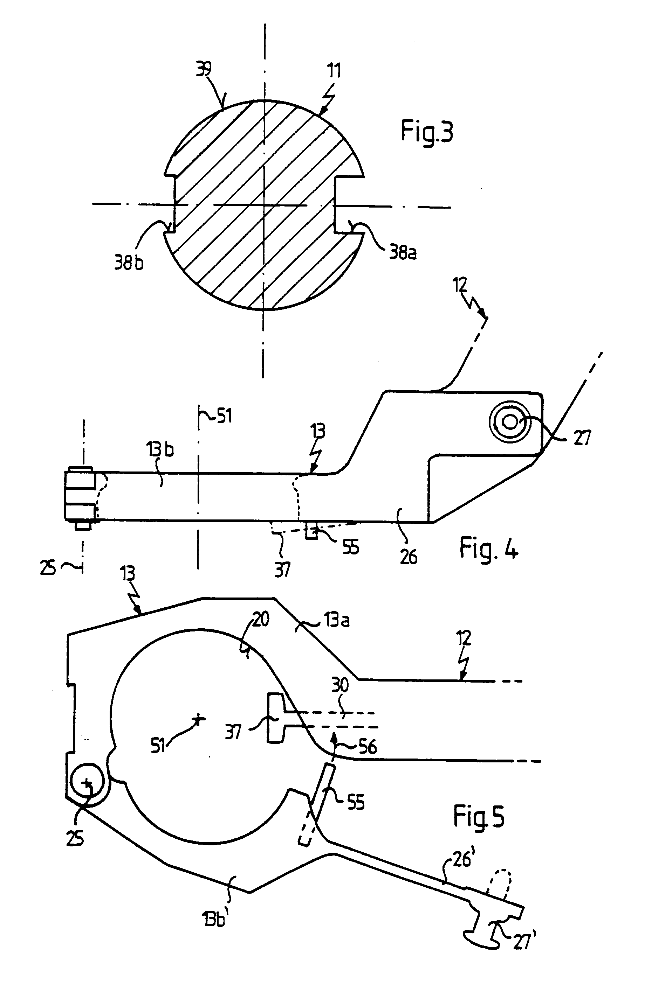

Wie man aus Fig. 3 erkennen kann, sind Werkzeughalter 11 der hier interessierenden Art an ihrem Umfang 39 mit zwei Aussparungen 38a, 38b versehen, die einander diametral gegenüberliegen. Eine der Aussparungen, in Fig. 3 die Aussparung 38a, ist dabei radial tiefer ausgebildet als die andere Aussparung 38b. Die Rastnase 37 ist nun so dimensioniert, daß sie die tiefere Aussparung 38a vollkommen ausfüllt. Dies ist bei der in Fig. 1 durchgezogen eingezeichneten Ruhestellung des Rasthebels 30 der Fall.

Aus Fig. 1 ist ferner erkennbar, daß der Rasthebel 30 am unteren Hebelarm zwischen der zweiten Achse 31 und der Rastnase 37 mit einem nach oben weisenden Vorsprung 45 versehen ist. Der Vorsprung 45 ragt durch eine Durchgangsbohrung 46 im Arm 12 und ist somit von oben her zugänglich.

Am Spindelgehäuse 47 der Werkzeugmaschine ist ein raumfester Anschlag 48 in Gestalt eines nach unter vorstehenden Zapfens angeordnet. Wird nun der Werkzeugwechsler 10 in Richtung des in Fig. 1 eingezeichneten Pfeiles 50 nach oben bewegt, bzw. die Spindel nach unten, um den Werkzeughalter 11 mit seinem Normkegel in Richtung seiner Achse 51 in eine zweite Aufnahme 52, nämlich die rotierende kegelige Aufnahme des Spindelstockes zu bringen, gelangt der Vorsprung 45 in Anlage an den Anschlag 48, so daß bei weiterer Bewegung des Werkzeugwechslers 10 nach oben der Rasthebel 30 in der Darstellung der Fig. 1 im Gegenuhrzeigersinn verdreht wird. Dies geschieht gegen die Kraft der Druckfeder 34 und bewirkt, daß die Rastnase 37 aus der in Fig. 1 durchgezogen eingezeichneten Stellung in die strichpunktiert eingezeichnete Stellung 37' gelangt. In dieser Stellung ist die Rastnase 37' außer Eingriff mit der Aussparung 38a, so daß der Werkzeughalter 11 sich nunmehr frei um seine Achse 51 drehen kann.

Auf diese Weise wird erreicht, daß beim Einspannen des Werkzeughalters 11 in die rotierende Aufnahme 52 der Spindel die Verrastung in Drehrichtung des Werkzeughalters 11 selbsttätig gelöst wird, ohne daß hierzu fremdkraftbetätigte Einrichtungen erforderlich sind.

Wenn andererseits beim Entleeren des Magazins der Werkzeugmaschine z. B. ein Werkzeughalter 11 aus dem Greifer 13 entnommen werden soll, so ist zunächst - wie beschrieben - durch Betätigen des Druckknopfes 27 der Finger 13b des Greifers 13 vom Finger 13a wegzuschwenken. In dieser Stellung kann der Werkzeughalter 11 jedoch noch nicht aus dem Greifer 13 entnommen werden, weil die Rastnase 37, deren Schwenkebene senkrecht zur Entnahmerichtung des Werkzeughalters 11 steht, dies verhindert. Der Benutzer der Werkzeugmaschine kann nun jedoch den Betätigungsknopf 32 des Rasthebels 30 betätigen und den Rasthebel 30 damit manuell in die in Fig. 1 strichpunktiert eingezeichnete Stellung verschwenken. Dann kann der Werkzeughalter 11 mit der anderen Hand in einfacher Weise aus dem Finger 13a des Greifers 13 entnommen werden. Beim nachfolgenden Bestücken des Greifers 13 mit einem neuen Werkzeughalter wird in umgekehrter Reihenfolge verfahren.

In den Fig. 4 und 5 ist ergänzend dargestellt, wie sichergestellt werden kann, daß die Rastnase 37 tatsächlich in die zugehörige Aussparung 38a eingeschwenkt worden ist.

Hierzu ist der Finger 13b an seiner Unterseite mit einem Riegel 55 versehen, dessen Bewegungsbahn beim Schließen der Finger 13a, 13b die Bewegungsbahn des Rasthebels 30 bei dessen Verschwenkung um die zweite Achse 31 schneidet. Befindet sich der Rasthebel 30 in der in Fig. 1 durchgezogen eingezeichneten Grundstellung, so fluchtet die Unterseite des Rasthebels 30 einschließlich der Rastnase 37 mit der Unterseite des Greifers 13. In diesem Falle kann der Finger 13b an den Greifer 13 herangeschwenkt werden, weil die Oberseite des Riegels 55 ebenfalls mit der Unterseite des Greifers 13 fluchtet.

Wenn jedoch die Rastnase 37, wie in Fig. 1 und 4 strichpunktiert eingezeichnet, nach unten über die Unterseite des Greifers 13 vorsteht, beispielsweise weil der Werkzeughalter 11 um 180° falsch herum eingesetzt wurde, wo die Rastnase 37 nicht in die flacherer Aussparung 38b eingreifen kann, so ist ein Schließen des Greifers 13 durch Heranschwenken des Fingers 13b nicht möglich, weil die nach unten vorstehende Rastnase 37' als Schikane für den Riegel 55 wirkt und dessen Bewegung in Richtung des Pfeiles 56 in Fig. 5 behindert wird. In diesem Falle merkt der Benutzer der Werkzeugmaschine sofort, daß der Werkzeughalter 11 falsch eingesetzt wurde, weil er den Greifer 13 gegen den mechanischen Widerstand nicht zu schließen vermag.

## Patentansprüche

1. Werkzeugmaschine mit einem mehrere in Greifern (13) gehaltene Werkzeughalter (11) enthaltenden Magazin, aus dem ein ausgewählter Werkzeughalter (11) mittels eines einen Greifer (13) aufweisenden Armes (12) entnehmbar und in eine Arbeitsstellung in einer rotierenden ersten Aufnahme (52) der Werkzeugmaschine einführbar ist, wobei der Werkzeughalter (11) im Greifer (10) mittels einer den Werkzeughalter (11) umfassenden zweiten Aufnahme (20) gehalten ist, die mit einem in eine Umfangsnut (22) des Werkzeughalters (11) formschlüssig greifenden Profil (21) versehen ist, derart, daß der Werkzeughalter (11) auch in der Arbeitsstellung im Greifer (13) verbleibt und sich in diesem dreht, wobei der Greifer (13) mit einem federbelasteten Rasthebel (30) versehen ist, dessen freies Ende als Rastnase (37) im unbelasteten Zustand der Feder (34) in eine Aussparung (38) am Umfang des Werkzeughalters (11) eingreift, und beim Einführen des Werkzeughalters (11) in die erste Aufnahme (52) mittels eines raumfesten Anschlages (48) gegen die Kraft der Feder (34) außer Eingriff mit der Aussparung (38) gebracht wird, und am Rasthebel (30) ein von der Rastnase (37) beabstandetes Betätigungselement (32) zum Herausschwenken der Rastnase (37) vorgesehen ist, dadurch gekennzeichnet, daß die zweite Aufnahme (20) den Werkzeughalter (11) ringförmig umfaßt und zwei gegeneinander verschwenkbare, jeweils etwa einen Halbkreisbogen der Aufnahme (20) bildende Finger (13a, 13b) aufweist, daß einer der Finger (13b) mit einem Riegel (55) versehen ist, und daß die Bewegungsbahn des Riegels (55) beim Verschwenken der Finger (13a, 13b) und des Rasthebels (30) beim Verschwenken der Rastnase (37) einander teilweise überschneiden, derart, daß beim Schließen der Finger (13a, 13b) zum Bilden der zweiten Aufnahme (20) der Rasthebel (30) nur in der eingeschwenkten Stellung der Rastnase (37) außerhalb der Bewegungsbahn des Riegels (55) liegt.

2. Werkzeugmaschine nach Anspruch 1, dadurch gekennzeichnet, daß der Rasthebel (30) zweiarmig ausgebildet ist, an seinem einen freien Ende die Rastnase (37) und an seinem anderen freien Ende einen Betätigungsknopf (32) zum manuellen Verschwenken des Rasthebels (30) trägt, und daß der Betätigungsknopf (32) auf der von der ersten Aufnahme (52) abgewandten Seite des Greifers (13) angeordnet ist.

## Claims

1. A machine tool comprising a magazine with several tool holders (11) held in grippers (13), a preselected tool holder (11) being adapted to be dischargeable from the magazine by means of an arm (12) comprising a gripper (13) and to be insertable into a working position of a rotating first receiving means (52) of the machine tool, the tool holder (11) being held in the gripper (10) by means of a second receiving means (20) encircling the tool holder (11), the second receiving means (20) being provided with a profile (21) engaging a peripheral groove (22) of the tool holder (11) in a form-locking manner, such that the tool holder (11) remains and rotates within the gripper (13) in the working position, the gripper (13) being provided with a spring-loaded stop-lever (30), a free stop nose (37) end of which engaging a recess (38) at the periphery of the tool holder (11) when the spring (34) is unloaded, the stop-lever (30) being, further, brought out of engagement with the recess (38) during the insertion of the tool holder (11) into the first receiving means (52) under the action of a stationary stop (48) against the force of the spring (34), an actuating element (32) distant from the stop nose (37) for swivelling outside the stop nose (37) being provided on the stop-lever (30), characterized in that the second receiving means (20) encircles the tool holder (11) like a ring and has two fingers (13a,13b) being swivellable against each other and each constituting approximately semi-circle of the receiving means (20), that one of the fingers (13b) is provided with a lock (55), and that the travel path of the lock (55) during swivelling of the fingers (13a,13b) and the travel path of the stop-lever (30) during swivelling of the stop nose (37) intersect partially, such that, during closing the fingers (13a,13b) for constituting the second receiving means (20), the stop-lever (30) is outside the travel path of the lock (55) only during the swivelled-inside position of the stop nose (37).

2. The machine tool of claim 1, characterized in that the stop-lever (30) is designed with two arms and carries at one of its free ends the stop nose (37) and at its other free end an actuating knob (32) for manually swivelling the stop-lever (30), and that the actuating knob (32) is arranged on that side of the gripper (13) being opposite to the first receiving means (52).

## Revendications

1. Machine-outil, avec un magasin comportant un ou plusieurs porte-outils (11) maintenus dans des préhenseurs (13), à partir duquel un porte-outil (11) sélectionné peut être prélevé au moyen d'un bras (12) présentant un préhenseur (13) et introduit, en une position de travail, dans un premier réceptacle tournant (52) de machine-outil, le porte-outil (11) étant maintenu dans le préhenseur (10) au moyen d'un deuxième réceptacle (20), entourant le porte-outil (11) et pourvu d'un profil (21) assurant un liaison de forme dans une gorge périphérique (22) du porte-outil (11), de telle façon que le porte-outil (11) reste également dans le préhenseur (13), dans la position de travail, et tourne dans celui-ci, le préhenseur (13) étant équipé d'un levier d'encliquetage (30) sollicité par un ressort, dont l'extrémité libre s'engage, à titre d'ergot d'encliquetage (37), lorsque le ressort (34) n'agit pas, dans un évidement (38) ménagé à la périphérie du porte-outil (11), et, lors de l'introduction du porte-outil (11) dans le premier réceptacle (52), est placé hors de prise de l'évidement (38), au moyen d'une butée (48) fixe dans l'espace, à l'encontre de la force du ressort (34), et sur le levier d'encliquetage (30) étant prévu un élément d'actionnement (32), écarté de l'ergot d'encliquetage (37) et destiné à faire sortir par pivotement l'ergot d'encliquetage (37), caractérisée en ce que le deuxième réceptacle (20) entoure le porte-outil (11) de façon annulaire et présente deux doigts (13a,13b) pivotant l'un vers l'autre, formant chacun un arc en demi-cercle du réceptacle (20), en ce que l'un des doigts (13b) est pourvu d'un verrou (55), et en ce que les trajectoires de déplacement du verrou (55), lors du pivotement des doigts (13a,13b) et du levier d'encliquetage (30), lors du pivotement de l'ergot d'encliquetage (37), se recoupent partiellement, de telle façon que, lors de la fermeture des doigts (13a,13b) pour former le deuxième réceptacle (20), le levier d'encliquetage (30) ne se trouve que dans la position refermée par pivotement de l'ergot d'encliquetage (37), à l'extérieur de la trajectoire de déplacement du verrou (55).

2. Machine-outil selon la revendication 1, caractérisée en ce que le levier d'encliquetage (30) comporte deux bras, porte à une première extrémité libre l'ergot d'encliquetage (37) et à sa deuxième extrémité libre un bouton d'actionnement (32), destiné à opérer un pivotement manuel du levier d'encliquetage (30), et en ce que le bouton d'actionnement (32) est disposé du côté du préhenseur (13) opposé au premier réceptacle (52).
